# EUROPEAN PATENT SPECIFICATION

(11) **EP 1 289 727 B1**
(45) Date of publication and mention of the grant of the patent: **30.11.2005**
(21) Application number: 00937381.2
(22) Date of filing: 06.06.2000
(51) Int. Cl.: B29C 44/34

(54) **PROCESS FOR PRODUCING PHYSICALLY FOAMED POLYOLEFIN FOAMS AND INSULATION FOAMS PREPARED THEREWITH**
VERFAHREN ZUR HERSTELLUNG VON PHYSIKALISCH GESCHÄUMTEN POLYOLEFIN-ISOLATIONSSCHÄUMEN UND DANACH HERGESTELLTE ISOLATIONSSCHÄUME
PROCEDE DE PRODUCTION DE PRODUITS MOUSSES DE POLYOLEFINE MOUSSES PHYSIQUEMENT, ET MOUSSES D'ISOLATION AINSI PREPAREES

(43) Date of publication of application: 12.03.2003
(73) Proprietor: Thermaflex International Holding B.V., 5145 NS Waalwijk (NL)
(72) Inventor: VAN DER VEN, Emanuel, Joseph, Herman, Marie, NL-5145 NS Waalwijk (NL); BOUT, Hendrik, Willem, NL-5145 NS Waalwijk (NL); DE BELL, Humphrey, Reginald, NL-5145 NS Waalwijk (NL); MAAS, Cornelis, Henricus, Johannes, NL-5145 NS Waalwijk (NL); BAARS, Gerrit-Jan, NL-5145 NS Waalwijk (NL)
(74) Representative: De Hoop, Eric
(86) International application number: PCT/NL2000/000384
(87) International publication number: WO 2001/094092

(56) References cited:
- WO-A-89/00918
- DE-A- 19 850 340
- US-A- 3 808 300

## Description

The present invention relates to a process for producing physically foamed polyolefin foams having a higher temperature resistance and in particular polyolefin foams which are resistant to temperatures up to 160 °C. The invention further relates to insulation foams produced by using this process.

Polyolefin foams are generally known and are used for a large number of applications, vide e.g. David B. Todd, Plastics Compounding, Equipment and Processing, Hanser Publishers, Münich, 1998 and Friedhelm Hensen, Plastics Extrusion Technology, Hanser Publishers, Münich, 1988.

A conventional process for producing polyolefin foams comprises melting the polyolefin and optional additives in an extruder, adding at high pressure a physical foaming agent such as an inert gas or inert liquid to the molten mass in the extruder, and extruding the molten mass through the die of the extruder, whereupon due to gas expansion or liquid evaporation at the lower pressure outside the extruder, the material expands to form a foam.

US patent specification 5817705 discloses a process for producing a closed-cell propylene polymer foam, which comprises feeding a propylene polymer resin into an extruder, adding a nucleating agent to the resin feed, plasticating the mixture in an extruder to form a polymeric melt, incorporating at least one foaming agent selected from organic foaming agents, inorganic foaming agents and mixtures thereof in the polymeric melt, to form a foamable composition, uniformly mixing said foamable composition and cooling said composition to a temperature effective for the expansion of the low-density propylene polymer foam, and extruding or ejecting the foamable composition through a die at a sufficiently high rate to form a low density closed-cell propylene polymeric resin foam with a Foamability Index in excess of 1.9 and an Ebullition Time of less than 2.1 x 10⁻⁴ seconds.

US 5817705 describes that for the production of a stable closed-cell propylene polymer foam by means of conventional processes with the aid of a physical foaming agent, it is required to use a polypropylene having a high melt strength (HMS-PP). Conventional propylene polymers are highly crystalline and have a poor melt strength. In addition to the rheological characteristics of the melt the extrusion rate is also an important factor in the foam production. By using the process of US 5817705 it is possible to produce thick cross-section, low density propylene polymer foams having combinations of cell sizes and foam densities which heretofore have been reported as unfeasible in the art.

As examples of foaming agents inorganic foaming agents such as argon, carbon dioxide, water and nitrogen, and organic foaming agents such as alkanes and partially fluorinated hydrocarbons are mentioned.

The known polyolefin foams are not resistant to higher temperatures, that is to say temperatures of about 105 °C or higher, so that said foams are not suitable for e.g. use as insulation material for hot water and steam pipes.

Foams having a higher temperature resistance are known, such as elastomers foamed by using AZO-compounds and polyurethane foams, but said materials have a number of disadvantages over polyolefins. For example, such materials can be less easily processed and recycled than olefins.

Therefore, there is a need of foams resistant to higher temperatures which can be prepared from recyclable materials.

It has now been found that it is possible to produce such a foam by using a process wherein first a homogeneous mixture comprising one or more polyolefins, selected from polypropylenes and polyethylenes and a physical foaming agent and having a melt range as measured by means of scanning differential calorimetry, within the range of 120 to 160°C, is produced, which subsequently, optionally after cooling and granulating, is extruded.

The invention provides a process for producing a polyolefin foam having a higher temperature resistance and comprising a polypropylene and/or polyethylene and optionally one or more other polyolefins and/or one or more conventional plastic foam additives, comprising the steps of
a) mixing and melting a polyolefin having a melting range as measured by means of differential scanning calorimetry at a heating rate of 10 °C/min, within the range of 95 to 170 °C or a mixture of one or more of such polyolefins and optionally other Polyolefins and/or additives so as to form a homogeneous mixture consisting of one single phase and having a melt temperature as measured by means of differential scanning calorimetry at a heating rate of 10 °C/min, of 120 to 160 °C,
b) feeding the homogeneous mixture obtained in step a) into an extruder and heating said mixture in a first part of the extruder to a temperature effective for melting the mixture,
c) mixing the molten mixture obtained in b) in a second part of the extruder at an increased pressure with a foaming agent comprising a substance which is liquid at the temperature and pressure in the extruder, but which evaporates at pressure drop,
d) cooling the molten mixture formed in c) to such a temperature to transfer the molten mixture from a liquid to a semi-crystalline phase, and
e) extruding the cooled mixture formed in d) through the die of the extruder, so that the extruded mixture expands by evaporation of the foaming agent to form a polyolefin foam, and subsequently further cooling said foam to ambient temperature.

The foams produced by using the process of the invention have a temperature resistance within the range of 120 to 160 °C dependent on the content and the type of the polyolefins used. The foams are particularly suitable for use as insulation, e.g. in the fields of split-airconditioning, high and low pressure steam pipes, district heating, sun-energy recovery, and process industry.

The foams are better processable than the conventional materials for these applications such as e.g. rock wool and polyurethane foam. The foams are ecologically sound and can be very well recycled.

The process of the invention can be carried out with conventional apparatus without any adaptation of said apparatus.

The melting range of the polyolefins is measured by means of differential scanning calorimetry (DSC) with a heating rate of 10 °C/min.

The used polyolefins having a melting range within the range of 95 to 170 °C in general have a MFI-value, as measured at 190 °C, not in excess of 8.5 g/10 min.

The term 'polyolefin' as used herein includes homopolymers and copolymers. Polyopropylene refers to both homopolymers of propylene and copolymers of propylene with other olefins. The polyolefins can be modified, e.g. by crosslinking of side groups.

As polyolefin having a melting range within the range of 95 to 170 °C for example a polypropylene having a melting range within the range of 140 to 170 °C or a polyethylene having a melting range of 95 to 135 °C can be used. An example of such a polypropylene having a melting range within the range of 140 to 170°C is HMS polymer supplied by Montell.

The polyolefins having a melting range within the range of 95 to 170 °C can be combined with one or more other polyolefins. Non-limitative examples of other polyolefins comprise low-density polyethylene, high-density polyethylene, polypropylene and EVA.

As foaming agents, any substance can be used, which is liquid at high pressure, in particular the pressure in the extruder used for carrying out the process, but which evaporates at lower pressure. Non-limitative examples of the foaming agent include alkanes having from 3 to 8 carbon atoms, such as e.g. propane, butane, isobutane and hexane.

The polyolefins can be mixed with common polyolefin-foam additives. Non-limitative examples thereof are flame-retardants, colourants, pigments, fillers, nucleating agents and stabilisers. The additives can be added in any amount that does not affect the properties of the foam formed, and are preferably added in an amount of from 0 to 17% by weight of the mixture, depending on the desired properties of the foam. Parts of the optional additives can also be mixed with the polyolefins in the extruder.

During mixing the polyolefins and optional additives for forming a homogeneous mixture in step a) of the process of the invention it is important that little friction energy is released. Mixing can be carried out in a conventional type of compounder, preferably a co-kneader. During mixing the mixture is melted at melting temperatures within the range of 120 to 200 °C. Usually the heat developed during kneading is sufficient for melting the mixture. Optionally the mixture can be heated when the kneading is started, and later on when friction heat is released, said mixture can be cooled. The residence time in the mixer should be short, preferably less than 6 minutes. The homogeneous phase formed in the mixer, when measuring the melting range by means of differential calorimetry (DSC) should show one peak in the DSC-diagram at a temperature of 120 to 160 °C. The forming of a homogeneous polyolefin mixture which shows one peak in the DSC-diagram is essential for obtaining the effect of the invention, viz. the production of a high temperature resistance polyolefin foam. The mixing and melting sequence is not critical. The polyolefins having a melting range within the range of 95 to 170 °C and the optional other polyolefins may first be melted and subsequently be mixed with the additives. Alternatively, all the components may be mixed first and subsequently melted. The resulting homogeneous mixture can be granulated under cooling in a granulting head provided on the mixer.

The homogeneous mixture formed in step a) of the process is subsequently melted in a conventional foam extruder provided with a plurality of individually controlled temperature zones. An example of a suitable extruder is a single screw extruder. The foaming agent is injected into the molten mixture in the extruder at a pressure of from 45 to 300 bar. Downstream the injection point of the foaming agent the molten mixture is cooled in the extruder to such a temperature to transfer the molten mixture from a liquid to a semi-crystalline phase. The transition of liquid phase to semi-crystalline phase is determined by means of volumetric density determination and is characterised by a strong decrease of the density. The liquid phase has a density of more than 500 kg/m³. The density of the semi-crystalline phase should be of from 10 to 250 kg/m³. The cooled mixture is subsequently extruded through the die of the extruder, whereupon the foaming agent evaporates so that a foam is formed. The foam is subsequently cooled to ambient temperature.
The foam can be extruded into any conventional form such as hollow tubular elements and plates. The die of the extruder in general has a cross-section of from 10 to 500 cm². The expansion ratio generally is a factor of 22 to 50.

The temperature resistance of the foams depends on the used polyolefins having a melting range within the range of 95 to 170°C. Insulation foams produced with from 40 to 95% by weight of polypropylene having a melting range within the range of 140 to 170 °C, from 0 to 55% by weight of other polyolefins and up to 12% by weight of flame extinguishers and optionally other additives have a temperature resistance within the range of 130 to 160 °C. Insulation foams produced with from 0 to 40% by weight of polypropylene having a melting range within the range of 140 to 170 °C, from 55 to 95% by weight of other polyolefins, up to 12% by weight of flame extinguishers and optionally other additives have a temperature resistance within the range of 110 to 130 °C.

The temperature resistance of the resulting foam can also be determined by means of differential scanning calorimetry.

Foams having a high polypropylene content have the best temperature resistance but are somewhat less flexible than the foams having a lower polypropylene content. The flexibility of the above mentioned foams containing from 40 to 95% by weight of popylpropylene having a melting range within the range of 140 to 170 °C in general have a flexibility of 0.10 N/mm² at 20% impression, measured according to DIN 53577, while the above mentioned foams containing from 0 to 40% by weight of polypropylene having a melting range within the range of 140 to 170°C in general have a flexibility of 0.06 N/mm² at 20% impression, measured according to DIN 53577.

### Example

Tubular insulation profiles having an inner diameter of 18 mm and a wall thickness of 9 mm were produced by first producing a homogeneous mixture of from 30 to 65% by weight Elenac 2426 F low density polyethylene as polyolefin having a melting range within the range of 95 to 170 °C, from 30 to 65% by weight of Lupolen 4261 AG high density polyethylene, from 5 to 10 % by weight of Saytex flame extinguisher, from 0 to 3.0% by weight of Alu 7417 insulation additive and from 0 to 2.0% by weight of PB 1850H colouring agent. These raw materials were compounded into a granulate in a BUSS type MDK 90 co-kneader. The temperature of the feeding zone of the kneader was kept at 100 °C. The polyethylenes were added at the first dosage point of the kneader. The homogeneous mixture was produced in an amount of from 300 to 500 kg/hour.
The resulting granulate was introduced in a single screw extruder having a plurality of separately adjustable temperature zones (designed by Thermaflex). The melting zones were adjusted at temperatures within the range of 200 to 300 °C. As nucleating agent from 0 to 3.0% by weight, based on the weight of the granulate, Schullman TPE 50 talc was added and as foaming additive from 0 to 5% by weight, based on the weight of the granulate, of Loxamide S was added. In the molten mixture about 0.15 1/min C₃-C₈-alkane foaming agent was injected. The mixture was cooled and transferred from a liquid into as semi-crystalline phase. The mass pressure in the extruder was from 70 to 90 bar and the mass temperature was from about 115 to 130 °C. The cooled mixture expanded at a die pressure of the extruder of from about 20 to 30 bar into a foam having a density of from 22 to 27 kg/m³. The DSC-diagram of the foam showed one single melt peak at about 128 °C.

## Claims

1. A process for producing a polyolefin foam having a higher temperature resistance and comprising a polypropylene and/or polyethylene and optionally one or more other polyolefins and/or one or more conventional plastic foam additives comprising the steps of
a) mixing and melting a polyolefin having a melting range as measured by means of differential scanning calorimetry at a heating rate of 10 °C/min, within the range of 95 to 170 °C or a mixture of one or more of such polyolefins and optionally other Polyolefins and/or additives so as to form a homogeneous mixture consisting of one single phase and having a melt temperature as measured by means of differential scanning calorimetry at a heating rate of 10°C/min, of 120 to 160 °C,
b) feeding the homogeneous mixture obtained in step a) into an extruder and heating said mixture in a first part of the extruder to a temperature effective for melting the mixture,
c) mixing the molten mixture obtained in b) in a second part of the extruder at an increased pressure with a foaming agent comprising a substance which is liquid at the temperature and pressure in the extruder, but which evaporates at pressure drop,
d) cooling the molten mixture formed in c) to such a temperature to transfer the molten mixture from a liquid to a semi-crystalline phase, and
e) extruding the cooled mixture formed in d) through the die of the extruder, so that the extruded mixture expands by evaporation of the foaming agent to form a polyolefin foam, and subsequently further cooling said foam to ambient temperature.

2. A process according to claim 1, wherein the mixing in step a) is carried out in a co-kneader.

3. A process according to claim 1 or 2, wherein during the melting of step a) the temperature is from 120 to 200 °C.

4. A process according to claim 1, 2 or 3, wherein a polypropylene having a melting range within the range of 140 to 170 °C is used as polyolefin having a melting range within the range of 95 to 170°C.

5. A process according to claim 1, 2 or 3, wherein a polypropylene having a melting range within the range of 140 to 170 °C is used as polyolefin having a melting range within the range of 95 to 170 °C and a polyethylene is used as other polyolefin.

6. A process according to claim 1, 2 or 3, wherein a polyethylene having a melting range within the range of 95 to 135 °C is used as polyolefin having a melting range within the range of 95 to 170° C and a polyethylene is used as other polyolefin.

7. A process according to any one of the preceding claims, wherein as foaming agent an alkane having from 3 to 8 carbon atoms is used.

8. Insulation foam comprising
a) a polypropylene and/or polyethylene,
b) a flame extinguisher, and
c) optionally one or more other polyolefins and/or one or more other plastic-foam additives, which insulation foam is produced by using the process of any one of the preceding claims.

9. Insulation foam according to claim 8 comprising from 40 to 95% by weight of polypropylene having a melting range within the range of 140 to 170 °C, 0 to 55% by weight of other polyolefins and up to 17% by weight of flame extinguishers and optionally other additives.

10. Insulation foam according to claim 8 comprising from 0 to 40% by weight of polypropylene having a melting range in the range of 140 to 170 °C, 55 to 95% by weight of other polyolefins, up to 17% by weight of flame extinguishers and optionally other additives.

## Patentansprüche

1. Verfahren zum Herstellen eines Polyolefinschaums mit einer Beständigkeit gegen höhere Temperaturen und umfassend ein Polypropylen und/oder Polyethylen und gegebenenfalls ein oder mehrere andere Polyolefine und/oder ein oder mehrere konventionelle Additive für Kunststoffschaum, umfassend die Schritte von:
a) Mischen und Schmelzen eines Polyolefins mit einem Schmelzbereich wie durch Differential-Scanning-Kalorimetrie bei einer Aufheizgeschwindigkeit von 10°C/Min. gemessen in dem Bereich von 95 bis 170°C, oder einer Mischung von einem oder mehreren von derartigen Polyolefinen und gegebenenfalls anderen Olefinen und/oder Additiven um so eine homogene Mischung bestehend aus einer einzelnen Phase und mit einer Schmelztemperatur wie durch Differential-Scanning-Kalorimetrie bei einer Aufheizgeschwindigkeit von 10°C/Min gemessen, von 120 bis 160°C gemessen, zu formen.
b) Zuführen der in Schritt a) erhaltenen homogenen Mischung in einen Extruder und Aufheizen der Mischung in einem ersten Teil des Extruders zu einer Temperatur effektiv um die Mischung zu schmelzen,
c) Mischen der in b) erhaltenen geschmolzenen Mischung in einem zweiten Teil des Extruders bei einem erhöhten Druck mit einem Treibmittel umfassend eine Substanz die bei der Temperatur und dem Druck in dem Extruder flüssig ist, aber welche bei Druckverlust verdämpft,
d) Kühlen der in c) geformten geschmolzenen Mischung zu einer derartigen Temperatur, wobei die geschmolzene Mischung von einer Flüssigkeitsphase in eine semi-kristallinische Phase übergeht, und
e) Extrudieren der in d) geformten gekühlten Mischung durch das Mundstück des Extruders, so daß die extrudierte Mischung durch Verdampfung des Treibmittels expandiert um einen Polyolefinschaum zu bilden, und darauffolgend weiter zur Umgebungstemperatur Kühlen des Schaums.

2. Verfahren nach Anspruch 1, wobei das Mischen in Schritt a) in einem Co-Kneter ausgeführt wird.

3. Verfahren nach Anspruch 1 oder 2, wobei während dem Schmelzen von Schritt a) die Temperatur zwischen 120 bis 200°C ist.

4. Verfahren nach Anspruch 1, 2 oder 3, wobei ein Polypropylen mit einem Schmelzbereich in dem Bereich von 140 bis 170°C als Polyolefin mit einem Schmelzbereich in dem Bereich von 95 bis 170°C benutzt wird.

5. Verfahren nach Anspruch 1, 2 oder 3, wobei ein Polypropylen mit einem Schmelzbereich in dem Bereich von 140 bis 170°C als Polyolefin mit einem Schmelzbereich in dem Bereich von 95 bis 170°C benutzt wird und ein Polyethylen als anderes Polyolefin benutzt wird.

6. Verfahren nach Anspruch 1, 2 oder 3, wobei ein Polyethylen mit einem Schmelzbereich in dem Bereich von 95 bis 135°C als Polyolefin mit einem Schmelzbereich in dem Bereich von 95 bis 170°C benutzt wird und ein Polyethylen als anderes Polyolefin benutzt wird.

7. Verfahren nach irgendeinem der vorhergehenden Ansprüche, wobei ein Alkan mit 3 bis 8 Kohlenstoffatomen als Treibmittel benutzt wird.

8. Isolationsschaum umfassend
a) ein Polypropylen und/oder Polyethylen
b) einen Flammenlöscher, und
c) gegebenenfalls ein oder mehrere andere Polyolefine und/oder ein oder mehrere andere Additive für Kunststoffschaum, welcher Isolationsschaum durch das Benutzen des Verfahrens nach irgendeinem der vorhergehenden Ansprüche hergestellt wird.

9. Isolationsschaum nach Anspruch 8, umfassend 40 bis 95 Gewichtsprozent Polypropylen mit einem Schmelzbereich in dem Bereich von 140 bis 170°C, 0 bis 55 Gewichtsprozent andere Polyolefine und bis 17% Gewichtsprozent Flammenlöscher und gegebenenfalls andere Additive.

10. Isolationsschaum nach Anspruch 8, umfassend 0 bis 40 Gewichtsprozent Polypropylen mit einem Schmelzbereich in dem Bereich von 140 bis 170°C, 55 bis 95 Gewichtsprozent andere Polyolefine, bis 17 Gewichtsprozent Flammenlöscher und gegebenenfalls andere Additive.

## Revendications

1. Procédé pour produire une mousse de polyoléfine ayant une résistance à la température plus élevée et comprenant un polypropylène et/ou polyéthylène et éventuellement une ou plusieurs autres polyoléfines et/ou un ou plusieurs additifs de mousses plastiques conventionnels comprenant les étapes de
a) mélange et fusion d'une polyoléfine ayant une plage de fusion mesurée par calorimétrie différentielle à balayage à une vitesse de chauffage de 10°C/min, dans la plage de 95 à 170°C ou d'un mélange d'une ou plusieurs de telles polyoléfines et éventuellement d'autres oléfmes et/ou additifs de manière à former un mélange homogène consistant en une seule phase et ayant une température de fusion mesurée par calorimétrie différentielle à balayage à une vitesse de chauffage de 10°C/min de 120 à 160°C,
b) introduction du mélange homogène obtenu dans l'étape a) dans une extrudeuse et chauffage dudit mélange dans une première partie de l'extrudeuse à une température efficace pour faire fondre le mélange,
c) mélange du mélange fondu obtenu en b) dans une seconde partie de l'extrudeuse à une pression accrue avec un agent porogène comprenant une substance qui est liquide à la température et à la pression dans l'extrudeuse, mais qui s'évapore lors d'une baisse de pression,
d) refroidissement du mélange fondu formé en c) à une température faisant passer le mélange fondu d'une phase liquide à une phase semi-cristalline, et
e) extrusion du mélange refroidi formé en d) au travers de la filière de l'extrudeuse, de sorte que le mélange extrudé subit une expansion par évaporation de l'agent porogène pour former une mousse de polyoléfine, puis refroidissement supplémentaire de ladite mousse jusqu'à la température ambiante.

2. Procédé selon la revendication 1 où le mélange dans l'étape a) est réalisé dans un co-malaxeur.

3. Procédé selon la revendication 1 ou 2 où, pendant la fusion de l'étape a), la température est de 120 à 200°C.

4. Procédé selon la revendication 1, 2 ou 3 où un polypropylène ayant une plage de fusion dans la plage de 140 à 170°C est utilisé comme polyoléfine ayant une plage de fusion dans la plage de 95 à 170°C.

5. Procédé selon la revendication 1, 2 ou 3 où un polypropylène ayant une plage de fusion dans la plage de 140 à 170°C est utilisé comme polyoléfine ayant une plage de fusion dans la plage de 95 à 170°C et un polyéthylène est utilisé comme autre polyoléfine.

6. Procédé selon la revendication 1, 2 ou 3 où un polyéthylène ayant une plage de fusion dans la plage de 95 à 135°C est utilisé comme polyoléfine ayant une plage de fusion dans la plage de 95 à 170°C et un polyéthylène est utilisé comme autre polyoléfine.

7. Procédé selon l'une quelconque des revendications précédentes où un alcane ayant de 3 à 8 atomes de carbone est utilisé comme agent porogène.

8. Mousse d'isolation comprenant
a) un polypropylène et/ou polyéthylène,
b) un extincteur de flammes, et
c) éventuellement une ou plusieurs autres polyoléfines et/ou un ou plusieurs autres additifs de mousses plastiques, laquelle mousse d'isolation est produite au moyen du procédé selon l'une quelconque des revendications précédentes.

9. Mousse d'isolation selon la revendication 8 comprenant de 40 à 95 % en masse de polypropylène ayant une plage de fusion dans la plage de 140 à 170°C, 0 à 55 % en masse d'autres polyoléfines et jusqu'à 17 % en masse d'extincteurs de flammes et éventuellement d'autres additifs.

10. Mousse d'isolation selon la revendication 8 comprenant de 0 à 40 % en masse de polypropylène ayant une plage de fusion dans la plage de 140 à 170°C, 55 à 95 % en masse d'autres polyoléfines, jusqu'à 17 % en masse d'extincteurs de flammes et éventuellement d'autres additifs.
